Europäisches Patentamt

European Patent Office

Office européen des brevets

(19)

(11) Veröffentlichungsnummer: **0 104 367**
**B1**

(12) **EUROPÄISCHE PATENTSCHRIFT**

(45) Veröffentlichungstag der Patentschrift:
28.12.88

(21) Anmeldenummer: 83107587.4

(22) Anmeldetag: 02.08.83

(51) Int. Cl.⁴: **C 12 C 1/10,** F 26 B 25/10

(54) Horde für Mälzereien und andere Gutbehandlungsräume.

(30) Priorität: 04.09.82 DE 3232977

(43) Veröffentlichungstag der Anmeldung:
04.04.84 Patentblatt 84/14

(45) Bekanntmachung des Hinweises auf die Patenterteilung:
28.12.88 Patentblatt 88/52

(84) Benannte Vertragsstaaten:
**BE DE FR GB NL**

(56) Entgegenhaltungen:
**DE-A- 3 147 671**
**GB-A- 1 582 203**
**US-A- 4 137 682**
**US-A- 4 282 694**

(73) Patentinhaber: **Bühler-MIAG GmbH,**
**Ernst-Amme-Strasse 19, D-3300 Braunschweig (DE)**

(72) Erfinder: **Amelung, Kurt, Heerstrasse 11,**
**D-3301 Denstorf (DE)**
Erfinder: **Peters, Manfred, Dipl.-Ing., Am Bulten 2,**
**D-3300 Braunschweig (DE)**

## Beschreibung

Gegenstand der Erfindung ist eine Horde für Mälzereien und andere Gutbehandlungsräume, mit einem Traggerüst und einem von diesem aufgenommenen Boden, der aus parallel eng nebeneinander angeordneten, selbsttragenden und nach unten offenen Blechhohlprofilen besteht, die mit Durchtrittsöffnungen für das Gutbehandlungsmedium versehen sind.

Horden dieser Art werden überwiegend zum Trocknen von Getreide benutzt. Ihre Vorteile beruhen im wesentlichen darauf, dass der Hordenboden aus als Halbzeug herstellbaren, nahezu verschnittlos ausnutzbaren Blechhohlprofilen zusammengefügt werden kann, indem die Hohlprofile auf dem Traggerüst einfach reihenweise aneinandergelegt und miteinander verbunden werden. Die Eignung derartiger Horden für Mälzereien, wo das zu behandelnde Gut einem Befeuchtungs-, Keim- und Darrprozess unterworfen wird, liegt auf der Hand, zumal dort die Hordenböden bislang aus einer Vielzahl einzelner, mit einem Lochbelag versehener Rahmen zusammengesetzt wurden, was angesichts der vielfältigen Schweiss- und Richtarbeiten als eine sehr arbeitsaufwendige Bauweise anzusehen ist. Auch ist die Materialausnutzung hierbei schlecht, das Gewicht pro $m^2$ Hordenfläche sehr hoch, und der gesamte Hordenboden wird mithin recht teuer.

Aus der US-PS 4 282 694 ist eine gattungsgemässe Horde bekannt, bei der die von einer Vielzahl freistehender Stützelemente aufgenommenen Blechhohlprofile zwar nebeneinander liegen, aber infolge nach aussen abgewinkelter Stege eine wellige Bodenfläche bilden. Auch ist das Gesamtgewicht dieser Horde insbesondere unter Einbeziehung der vielen Stützelemente relativ hoch, und die Verwendung zweier Arten von Profilen mit jeweils unterschiedlicher Flanschhöhe verteuert die Lagerhaltung und erschwert die Montage. Aber schon aufgrund der unebenen Bodenfläche ist diese Konstruktion zur Verwendung in Mälzereien nicht geeignet, weil hier die gesamte Bodenfläche überstreichende Abräumwerkzeuge in Gestalt von Schnecken oder Schaufeln zum Einsatz kommen, deren Betriebsweise einen absolut ebenen Hordenboden erfordern.

Diesen Anforderungen könnten die aus der GB-PS 1 582 203 bekannten Blechhohlprofile etwas besser gerecht werden, indem sie relativ eng nebeneinanderliegen und – bis auf Materialeindrückungen zur Bildung der Durchtrittsöffnungen – eine ebene Oberfläche bilden. Indessen liegen diese Profile nicht wirklich eng nebeneinander, was, wie Versuche gezeigt haben, bei Profilen grösserer Länge mit rechtwinklig abgebogenen Flanschen praktisch nicht erreichbar ist, sondern es bestehen zwischen ihnen kleine Spalte, in die einzelne Gutpartikel eindringen und sich darin festsetzen können. Als besonders nachteilig erweist sich auch, dass die für die Verbindung der Profile untereinander vorgesehenen Abkantungen bzw. Winkelflansche diese Spalte nach unten verschliessen, so dass eingedrungene Gutpartikel für immer darin verbleiben, was zu einer im Hinblick auf die Sanitation nicht akzeptablen Schimmelbildung führt.

In ganz ähnlicher Weise lässt sich auch das aus der US-PS 4 137 682 bekannte Systeme für Trocknungsböden charakterisieren:

Auch hier gilt, wenngleich die zeichnerische Darstellung etwas anderes suggerieren mag, dass in der Praxis eine vollflächige Anlage paralleler Profilflansche, insbesondere bei grösseren Profillängen, nicht erreichbar ist, sondern die erwähnten Spaltbildungen mit ihren unerwünschten Wirkungen auftreten. Auch bei dieser Konstruktion besteht der Nachteil, dass es für eingedrungene Gutpartikel keinen Weg gibt, je wieder aus dem Spalt auszutreten. Schliesslich bedarf es zur Aufnahme der Blechprofile bzw. zu ihrer Verbindung untereinander einer grossen Anzahl einzelner, massiver Stützelemente, die jeweils mit passenden und im Abstand der Profilbreite angeordneten Rasthaken versehen sein müssen, was Herstell- und Lagerhaltungskosten ansteigen lässt. Auch sind diese Stützelemente wegen der asymmetrischen Abkantungen der Hohlprofile und der entsprechenden Gestaltung der Rasthaken nicht universell, sondern nur in einer Aufstellungsart verwendbar, was – wie auch die Einhaltung möglichst gleichmässiger Aufstellabstände – erhöhte Aufmerksamkeit bei der Montage des Systems erfordert.

Der Erfindung liegt die Aufgabe zugrunde, Horden der genannten Gattung dahingehend zu verbessern, dass die unerwünschte Spaltbildung zwischen den Blechhohlprofilen praktisch beseitigt wird und gleichzeitig eine Austrittsmöglichkeit für dennoch in Einzelfällen zwischen die Profile gelangende Gutpartikel besteht. Weiterhin soll die Montage vereinfacht, die Montagezeit gesenkt und ein insgesamt geringeres Quadratmetergewicht der Horde als bei bekannten Konstruktionen erreicht werden.

Diese Aufgabe ist durch die im kennzeichnenden Teil des Patentanspruches 1 angegebenen Merkmale gelöst. Weitere erfinderische Ausgestaltungen sind in den Unteransprüchen angegeben.

Durch die erfindungsgemässe Ausbildung wird eine quasi linienförmige Berührung bzw. Aneinanderpressung benachbarter Blechhohlprofile im Bereich der Hordenoberfläche bewirkt, wodurch jegliche Spaltbildung praktisch ausgeschlossen ist. Gleichzeitig wird unterhalb der Berührungslinie durch die sich hier als ein Divergieren darstellende Flanschgestaltung und durch die nach innen gerichteten Rastleisten ein Freiraum geschaffen, der etwa eingedrungenen Gutpartikeln das Austreten nach unten ermöglicht. Die Konvergenz der Flansche der Blechhohlprofile ermöglicht zudem ein gewisses Auseinanderfedern der Rastleisten und schafft damit die Voraussetzungen, die Hohlprofile durch einfaches Herunterdrücken – druckknopfähnlich – formschlüssig miteinander verbinden zu können.

Mit der Ausbildung nach den Patentansprüchen 2 und 3 wurde ein Verbindungsmittel für die Blechhohlprofile geschaffen, das kostengünstig ist, sich besonders einfach handhaben lässt und nicht nur eine zuverlässige Verbindung für die Blechhohlprofile untereinander bildet, sondern durch nach der Verlegung vorgenommenes, stellenweises Eindellen des einen Schenkels der Klemmschiene in einfachster Weise ermöglicht, letztere und damit die an ihr fetgeklemmten Blechhohlprofile ihrerseits an den Trägern des Traggerüstes zu befestigen.

In der Zeichnung ist ein Ausführungsbeispiel der Horde nach der Erfindung dargestellt, das im nachfolgenden beschrieben wird. Es zeigen

Fig. 1 teilweise einen Querschnitt durch ein Mälzereigebäude mit einer Horde in Draufsicht, wobei der Hordenboden teilweise ausgebrochenen dargestellt ist,

Fig. 2 einen Querschnitt durch die Horde nach Linie II–II in Fig. 1,

Fig. 3 einen Querschnitt durch einen Träger des Traggerüstes der Horde und die von ihm aufgenommene Klemmschiene sowie das von dieser gehaltene Blechhohlprofil im grösseren Massstab,

Fig. 4 teilweise eine Seitenansicht des Traggerüstträgers nach Fig. 3 samt zugeordneter Klemmschiene und von letzterer fixierten Blechhohlprofilen, ebenfalls im grösseren Massstab und

Fig. 5 einen vergrössert gezeichneten Ausschnitt aus Fig. 4 mit der Klemmschiene und einem ihrer Nasenpaare.

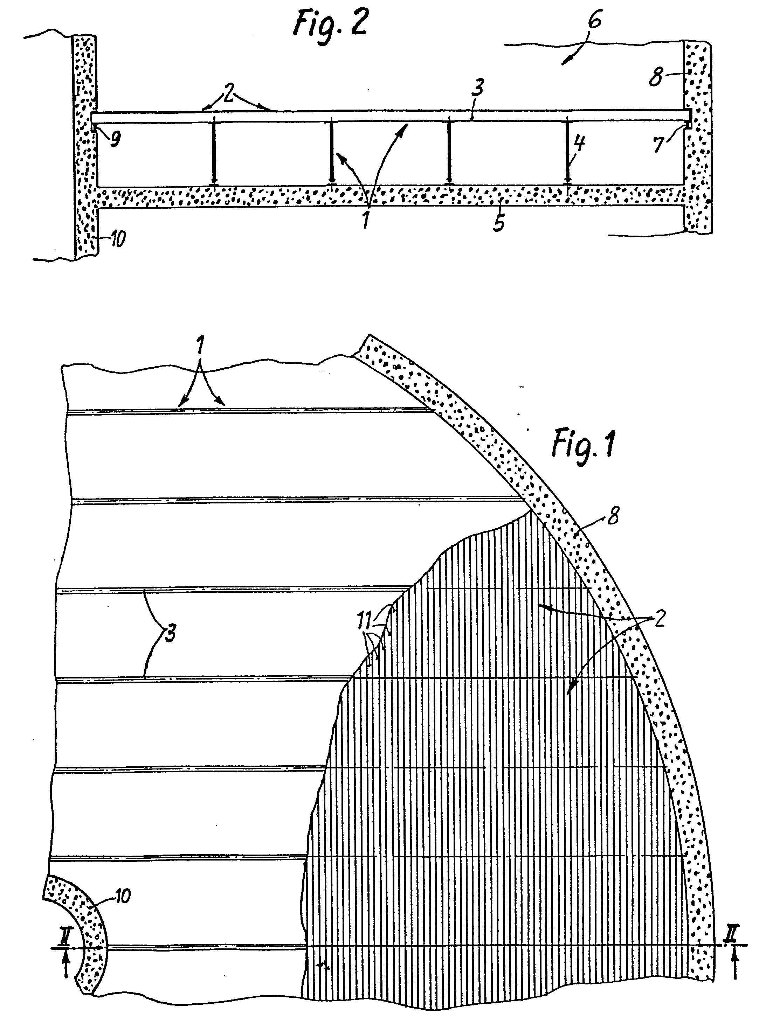

Die beispielsweise zum Keimen von Grünmalz bestimmte, kreisförmige Horde besteht gemäss den Figuren 1 und 2 aus einem Traggerüst 1 und einem Boden 2.

Das Traggerüst 1 ist aus horizontalen Trägern mit I-Profil und vertikalen Stützen 4 aufgebaut, welche die Träger 3 in annähernd gleichmässigen Abständen unterstützen und auf dem Boden 5 des Gutbehandlungsraumes 6 stehen. Jeder der parallel verlaufenden Träger 3 ruht mit seinem einen Ende auf einem Lagerbock 7, der in einer Ausnehmung der Aussenwand 8 des Mälzereigebäudes verankert ist, und mit seinem anderen Ende auf einem Lagerbock 9, welcher in einer Ausnehmung der Mittelsäule 10 oder in einer anderen Ausnehmung der Aussenwand 8 fixiert ist.

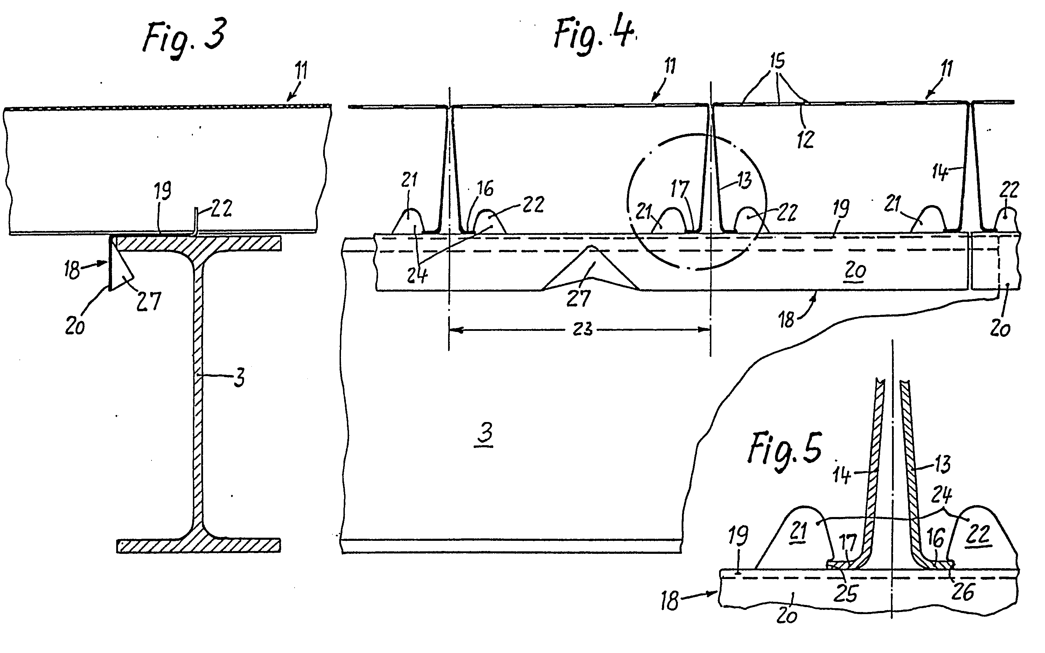

Der Boden 2 der Horde ist aus Blechhohlprofilen in Gestalt von im Querschnitt U-förmigen Klemmprofilen 11 zusammengesetzt. Die in endlichen Längen, zum Beispiel von 6 m Länge, als Halbzeug angelieferten Klemmprofile 11, welche beispielsweise aus Edelstahl oder Zinkblech gewalzt sein können, sind eng parallel aneinanderliegend als zu ihrer Längsachse queraxiale Reihen auf den Trägern 3 angeordnet, wobei sie wegen des kreisförmigen Querschnitts des Gutbehandlungsraumes 6 bzw. der Bogenform der Aussenwand 8 des Mälzereigebäudes radial aussen auf entsprechend kürzere Längen geschnitten sind (Fig. 1). Wie sich aus den Figuren 3 und 4 erkennen lässt, sind die Klemmprofile 11 als U-Profile ausgebildet, deren Stege 12 über die gesamte Länge der Klemmprofile 11 sich erstreckende Reihen Schlitze 15 für den Durchtritt der Keimluft haben und deren nach unten weisende Flansche 13, 14 konvergieren und an ihren freien Enden je eine nach innen gerichtete Rastleiste 16 bzw. 17 besitzen.

Zum Verbinden der Klemmprofile 11 untereinander dienen quer zu ihren Längsachsen auf jedem Träger 3 aufgelegte, stirnseitig aneinandergrenzende Klemmschienen 18 vorgegebener Länge, zum Beispiel von 1,50 m Länge (Fig. 4). die als rechtwinkelige Winkelprofile aus Blech geformt sind und einen horizontalen Schenkel 19 sowie einen vertikalen Schenkel 20 haben (Fig. 3), welcher die Klemmschiene 18 in horizontaler Ebene versteift. Mit ihrem Schenkel 19 liegen die Klemmschienen 18 auf dem zugeordneten Träger 3 auf und weisen am freien Ende dieses Schenkels 19 Nasenpaare 24 aus Nasen 21, 22 auf, welche nach oben gerichtet sind; die Nasenpaare 24 sind mit einer Teilung 23 über die Länge der Klemmschiene 18 verteilt angeordnet, wobei die Teilung 23 gleich der Breite eines Klemmprofils 11 ist (Fig. 4). Die Nasen 21, 22 jedes Nasenpaares 24 haben auf ihren einander zugekehrten Seiten je eine Rastkerbe 25 bzw. 26 (siehe den in Fig. 5 vergrössert dargestellten Ausschnitt, der in Fig. 4 durch einen Kreis markiert ist). In die Rastkerben 25, 26 sind durch die Klemmwirkung der Flansche 14, 13 sowie durch Druckausübung von oben bei der Montage auf das Klemmprofil 11 je eine Rastleiste 17 bzw. 16 eingerastet, und zwar ist jeweils – wie die Fig. 4 und 5 zeigen – die Rastleiste 16 des einen Flansches 13 eines Klemmprofiles 11 in die Rastkerbe 26 einer Nase 22 eines Nasenpaares 24 und die Rastleiste 17 seines anderen Flansches 14 in eine Rastkerbe 25 der Nase 21 des benachbarten Nasenpaares 24 eingerastet.

Sollen die Klemmprofile 11 nicht nur untereinander, sondern auch mit den Trägern 3 des Traggerüstes verbunden werden, so kann dies in einfacher Weise dadurch geschehen, dass in Abständen Dellen 27 in die vertikalen Schenkel 20 der Klemmschienen 18 geschlagen werden, wodurch sie und die von ihnen gehaltenen bzw. durch sie verbundenen Klemmprofile 11 formschlüssig an den Trägern 3 und damit am Traggerüst 1 fixiert werden. Die Fig. 3 und 4 veranschaulichen beispielsweise eine solche Fixierung mittels Dellen 27.

**Patentansprüche**

1. Horde für Mälzereien und andere Gutbehandlungsräume, mit einem Traggerüst und einem von diesem aufgenommenen Boden, der aus parallel eng nebeneinander angeordneten, selbsttragenden und nach unten offenen Blechhohlprofilen besteht, die mit Durchtrittsöffnungen für das Gutbehandlungsmedium versehen sind, dadurch gekennzeichnet, dass die Blechhohlprofile (11) U-Profile sind, deren Flansche (13, 14) nach unten konvergieren und an ihren freien Enden nach innen gerichtete Rastleisten (16, 17) zu Verbindungszwecken aufweisen.

2. Horde nach Anspruch 1, dadurch gekennzeichnet, dass als Verbindungsmittel für die Blechhohlprofile (11) Klemmschienen (18) vorgesehen sind, welche auf dem Traggerüst (1, 3) verlegt sind.

3. Horde nach Anspruch 2, dadurch gekennzeichnet, dass die Klemmschienen (18) rechtwinkelige Winkelprofile aus Blech sind, die mit einem Schenkel (19) auf dem Traggerüst (1, 3) aufliegen und am freien Ende dieses Schenkels (19) nach oben weisende Nasenpaare (24) aufweisen, welche mit einer Teilung (23) gleich der Breite der Blechhohlprofile (11) über die Länge der Klemmschiene (18) verteilt sind, wobei die beiden Nasen (21, 22) jedes Nasenpaares (24) auf ihren einander zugekehrten Seiten je eine Rastkerbe (25 bzw. 26) zum Aufnehmen einer Rastleiste (17 bzw. 16) eines Blechhohlprofils (11) besitzen.

## Claims

1. A kiln floor for malting plants and other product treatment chambers, with a supporting frame and a floor received thereby, which floor consists of self-supporting hollow sheet metal sections which open downwards and are arranged parallel und closely adjacent to each other, which are provided with openings for the product treatment medium, characterised in that the hollow sheet metal sections (11) are U-profiles, the flanges (13, 14) of which converge downwards and have on their free ends catching bars (16, 17) pointing inwards for connection purposes.

2. A kiln floor according to Claim 1, characterised in that clamping rails (18) are provided as connection means for the hollow sheet metal sections (11), which rails are laid on the supporting frame (1, 3).

3. A kiln floor according to Claim 2, characterised in that the clamping rails (18) are right-angled angular sections made of sheet metal, which rest with one flange (19) on the supporting frame (1, 3) and have at the free end of said flange (19) pairs of projections (24) pointing upwards which are distributed with a spacing (23) equal to the width of the hollow sheet metal sections (11) across the length of the clamping rail (18), the two projections (21, 22) of each pair of projections (24) having on their sides facing one another one catching notch (25 or 26 respectively) each to receive a catching bar (17 or 16 respectively) of a hollow sheet metal section (11).

## Revendications

1. Claie pour malteries et autres espaces de traitement de produits qui comporte un bâti porteur et un fond monté dans ce bâti et constitué par des profilés creux auto-portants en tôle disposés parallèlement les uns contre les autres et ouverts vers le bas qui comportent des ouvertures de passage pour le milieu assurant le traitement des produits, caractérisée en ce que les profilés creux en tôle (11) sont des profilés en U dont les ailes (13, 14) convergent vers le bas et comportent à leurs extrémités libres des bords (16, 17) dirigés vers l'intérieur pour assurer l'assemblage.

2. Claie selon la revendication 1, caractérisée en ce que l'assemblage des profilés creux (11) en tôle est assuré par des rails de serrage (18) qui sont posés sur le bâti porteur (1, 3).

3. Claie selon la revendication 2, caractérisée en ce que les rails de serrage (18) sont des profilés angulaires en tôle qui s'appliquent par l'une de leurs ailes (19) sur le bâti porteur (1, 3) et comportent, à l'extrémité libre de cette aile (19), des paires de becs (24) tournés vers le haut qui sont réparties sur toute la longueur du rail de serrage (18) à des distances (23) égales à la largeur des profilés creux en tôle (11), les deux becs (21, 22) de chaque paire de becs (24) comportant, sur chacun de leurs côtés tournés l'un vers l'autre, une encoche d'arrêt (25 ou 26) dans laquelle s'engage un bord (17 ou 16) d'un profilé creux en tôle (11).

## Fig. 2

## Fig.1

Fig. 3

Fig. 4

Fig. 5

EP 0 104 367 B1